# EUROPEAN PATENT APPLICATION

(11) **EP 1 262 710 A2**
(43) Date of publication of application: **04.12.2002**
(21) Application number: 02253152.9
(22) Date of filing: 03.05.2002
(51) Int. Cl.: F17C 13/08

(54) **Portable modular storage assembly for gas vessels**

(30) Priority: 18.05.2001 GB 0112169
(71) Applicant: Maltab Limited, Manchester M13 9PL (GB)
(72) Inventor: Malseed, Kerry, Timperley, Altrincham, WA15 7AY (GB)
(74) Representative: Stuttard, Garry Philip

(57) **Abstract**

The present invention relates to a modular storage assembly for storing one or more gas cylinders or canisters (*eg* breathing apparatus), in particular to a modular storage assembly comprising laterally stacked, unitary elongate housings.

## Description

The present invention relates to a modular storage assembly for storing one or more gas cylinders or canisters *(eg* breathing apparatus), in particular to a modular storage assembly comprising laterally stacked, unitary elongate housings.

Gases such as oxygen, hydrogen, nitrogen or mixtures thereof are frequently supplied in pressurised gas cylinders or canisters. For example, a breathing apparatus used by the rescue services *(eg* fire rescue or ambulance services) or by divers typically comprises a pressurised oxygen cylinder or canister. Similarly, research departments or manufacturing companies use pressurized gas cylinders for research or manufacturing purposes. Where pressurised gas cylinders are used in large numbers, they need to be stored securely for safety purposes.

Conventional assemblies used by the rescue services for storing breathing apparatus are rather rudimentary and cumbersome in nature. Typically, breathing apparatus will be stored in a large, wooden "pigeon hole" assembly or in a "wine rack" type assembly of a unitary nature. Such conventional assemblies tend to be permanently erected *in situ* and are thereafter non-portable.

The present invention seeks to overcome certain disadvantages of conventional assemblies by providing a modular storage assembly for one or more gas cylinders *(eg* pressurised gas cylinders) which by virtue of its inherent versatility is straightforward and inexpensive to assemble/disassemble whilst being portable and permitting robust and safe storage of any number of gas cylinders such as breathing apparatus.

Thus viewed from one aspect the present invention provides a modular storage assembly for storing one or more gas cylinders or canisters *(eg* pressurised gas cylinders or canisters) comprising:
a plurality of laterally stacked, unitary elongate housings, each unitary elongate housing capable of housing a gas cylinder or cannister.

The modular nature of the storage assembly of the invention makes it more straightforward and less costly to manufacture than a complex unitary structure fulfilling the same function. The modular structure is sturdy and provides a robust foundation for safe storage of gas cylinders. A preassembled modular storage assembly may be advantageously transported onto a site in ready to use condition or it may be provided to the user in disassembled form for straightforward assembly *in situ.*

It will be appreciated that in general the precise configuration and size of each unitary elongate housing may be tailored to meet the requirements and conform to the size of the gas cylinder which it is desired to house. A typical gas cylinder has a body of an elongate nature with an end valve. Each unitary elongate housing may be generally box-like *(eg* cuboidal or cubic) or cylindrical or any other suitable shape capable of encapsulating the gas cylinder.

The plurality of unitary elongate housings may be laterally stacked in any convenient manner *(eg* in a staggered or regular manner).

In a preferred embodiment of the modular storage assembly of the invention, the plurality of unitary elongate housings are laterally stacked in registry.

In a preferred embodiment of the modular storage assembly of the invention, the plurality of unitary elongate housings are laterally stacked in a staggered fashion. The modular storage assembly of this embodiment adopts a pyramidal shaped stack which is very stable.

In a preferred embodiment of the modular storage assembly of the invention, the plurality of unitary elongate housings are laterally and interlockably stacked.

Preferably each unitary elongate housing comprises;
a first end member spaced coaxially apart from a second end member, said first and second end member being interconnected by two or more spaced apart, elongate support members for supporting the body of the gas cylinder.

Preferably the first and/or second end member is planar. Particularly preferably the first planar end member and second planar end member are parallel spaced apart.

The or each elongate support member may be connected at or near to the perimeter of the first end member and at or near to the perimeter of the second end member in any convenient manner. The or each elongate support member may be regularly connected about the perimeter of the first end member and second end member. Preferably at least one of the first end member and second end member is releasable *(eg* quick releasable) so as to permit removal for the purposes of installing a gas cylinder.

In a preferred embodiment, the first end member is a collar member adapted to support the neck of the gas cylinder. Preferably the collar member is releasable *(eg* quick releasable). For example, the first end member may incorporate an aperture, hollow, depression or cup to support the neck of the gas cylinder. Preferably the first end member incorporates an aperture to support the neck of the gas cylinder. The aperture may advantageously protects the end valve on the gas cylinder.

In a preferred embodiment, the second end member is a base member adapted to support a portion of the base of the gas cylinder. For example, the second end member may incorporate an aperture, hollow, depression or cup to support a portion of the base of the gas cylinder.

The first and/or second end member may adopt a substantially box-like structure. In a preferred embodiment, a central portion of each edge of the box-like structure is inwardly curved *(eg* concave).

Preferably the inwardly curved central portion of each edge of the box-like structure is separated by regular box-like corners. This assists regular lateral stacking by permitting the box-like comers of a first unitary elongate housing to be seated against the corresponding box-like comers of an adjacent unitary elongate housing.

To advantageously assist interlockable stacking, an edge of the box-like structure of a first unitary elongate housing is preferably adapted to interlock an edge of the box-like structure of an adjacent unitary elongate housing. Preferably opposing edges of the first unitary elongate housing are each preferably adapted to interlock an edge of the box-like structure of an adjacent unitary elongate housing. Particularly preferably an edge of the box-like structure comprises a rib capable of engaging a recess in an edge of the box-like structure of the adjacent unitary elongate housing. More preferably the edge of the box-like structure comprises a first rib and second rib capable of engaging a first recess and a second recess in the edge of the box-like structure of the adjacent unitary elongate housing. Preferably the ribs and recesses are located in portions of the box-like corners.

Preferably the inwardly curved central portion of each edge is separated by rounded corners. This assists staggered lateral stacking by permitting the rounded comers of a first unitary elongate housing to be seated against the inwardly curved central portion of each edge of an adjacent unitary elongate housing.

The box-like or rounded corners of the above embodiments may be advantageously provided with grip means rigid to provide grip and stability. For example, the grip means may be plastic or rubber surfaces.

To advantageously assist interlockable stacking, the first and/or second end member comprises a first flat member connected face to face to a second flat member (of largely identical construction) and the first flat member and second flat member are axially offset. The first flat member and second flat member of the first and/or second end member are capable of engaging a first flat member and a second flat member of a first and/or second end member of an adjacent unitary elongate housing.

In a preferred embodiment, each elongate support member is a supporting rod, the volume bounded by which serves to encapsulate the gas cylinder. Preferably the unitary elongate housing comprises at least three supporting rods, particularly preferably at least four supporting rods, especially preferably four supporting rods.

In a preferred embodiment, each elongate support member is a trough member, the interior curved surfaces of which serves to encapsulate the gas cylinder. Preferably the unitary elongate housing comprises two trough members being a first and a second trough member.

To advantageously assist interlockable stacking, the exterior surface of a first trough member is preferably adapted to interlock the exterior surface of a second trough member of an adjacent unitary elongate housing. Particularly preferably the exterior surface of the first trough member comprises an elongate rib capable of engaging an elongate recess in the exterior surface of the second trough member of the adjacent unitary elongate housing. More preferably the exterior surface of the first trough member comprises a first elongate rib and second elongate rib capable of engaging a first elongate recess and second elongate recess in the exterior surface of the second trough member of the adjacent unitary elongate housing.

The modular storage assembly may be used to store gas cylinders horizontally or vertically. The material used to construct the assembly may be plastic, wood or metal *(eg* aluminium).

Adjacent unitary elongate housings may be fastened together using conventional fasteners such as threaded fasteners.

In a preferred embodiment, a pair of adjacent unitary elongate housings are interlockably stacked by a locking member *(eg* a locking plug). The locking member may comprise a body *(eg* a cylindrical body), to a rear end of which is attached at least two pegs *(eg* cylindrical pegs). Each peg engages a slot *(eg* a cylindrical slot) disposed in a corner of each of the pair of unitary elongate housings *(eg* in the first or second end member thereof). Particularly preferably two pairs of adjacent unitary elongate housings are interlocked by a locking member *(eg* a locking plug), to the rear end of which is attached at least four pegs *(eg* cylindrical pegs). Each peg engages a slot *(eg* a cylindrical slot) disposed in a corner of each of the two pairs of unitary elongate housings *(eg* in the first or second end member thereof).

To the front end of the body of the locking member is a handling member (eg a handling peg) which may be pulled for the purposes of withdrawing the locking member from the slots.

The first and/or end member and/or one or more of the support members may be provided with a handle (*eg* a cut-out or external handle) to assist portability and disassembly.

Viewed from a further aspect the present invention provides a unitary elongate housing as hereinbefore defined.

The present invention will now be described in a non-limitative sense with reference to the accompanying Figures in which:
Figure 1 illustrates a unitary elongate housing of a first embodiment of the storage assembly of the invention in disassembled view;
Figure 2c illustrates a second embodiment of the storage assembly of the invention in cross-sectional view;

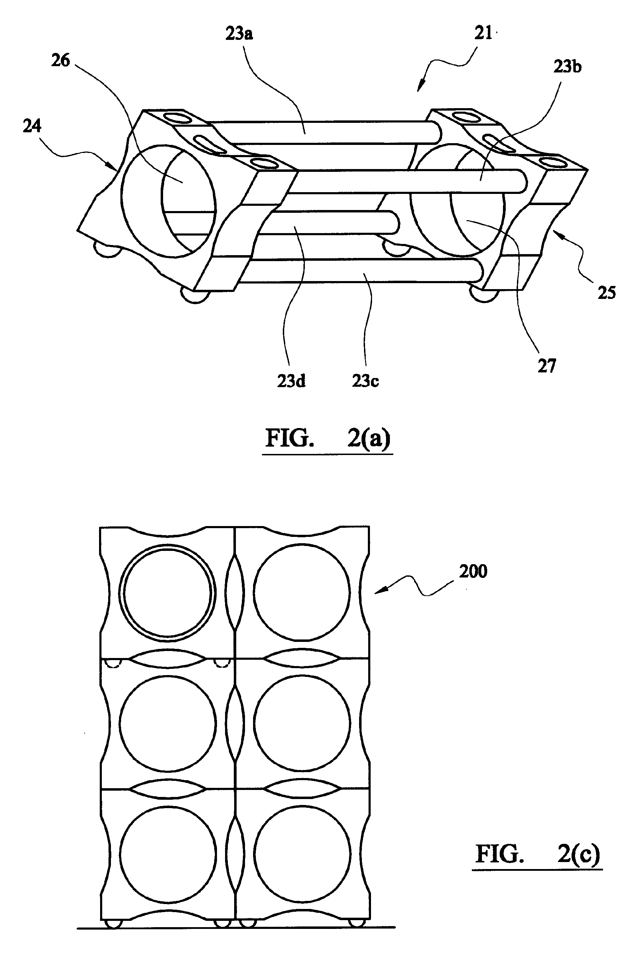

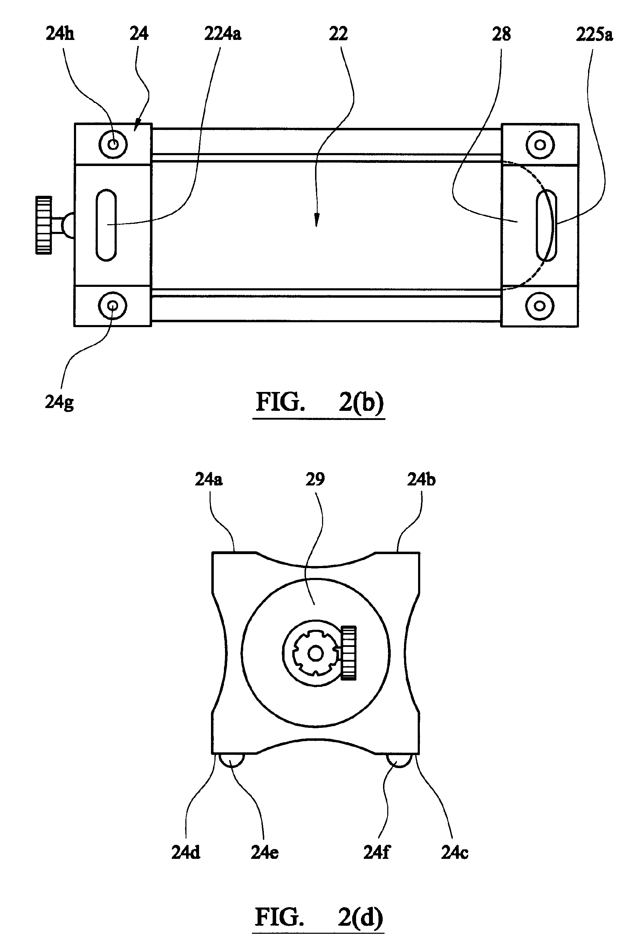

Figures 2, a, b and d illustrate a unitary elongate housing of the embodiment illustrated in Figure 2c in perspective, top (with installed cylinder) and end (with installed cylinder) view respectively;

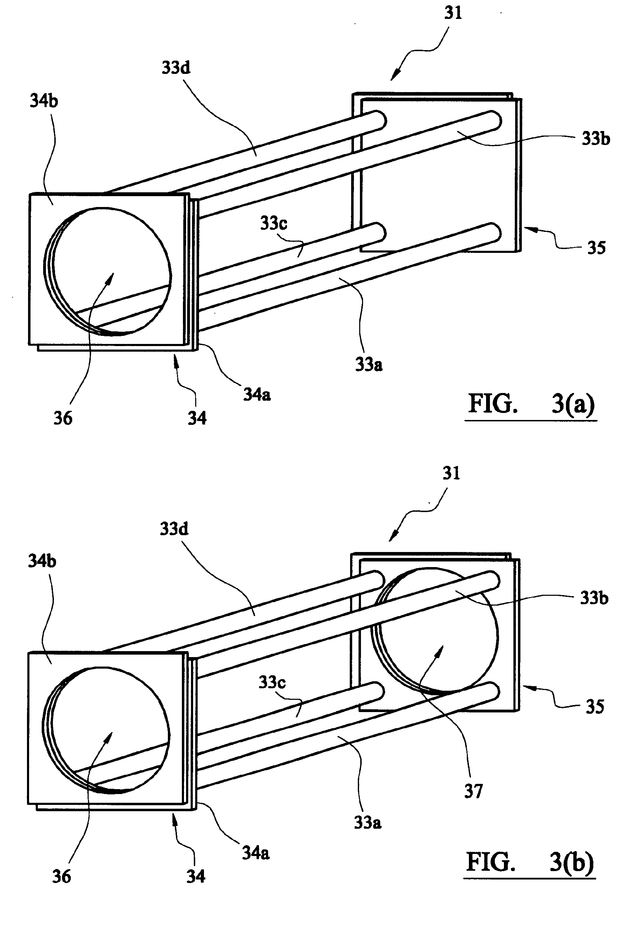

Figures 3a and b illustrate a unitary elongate housing of a third embodiment of the storage assembly of the invention in perspective view with an without an apertured base;

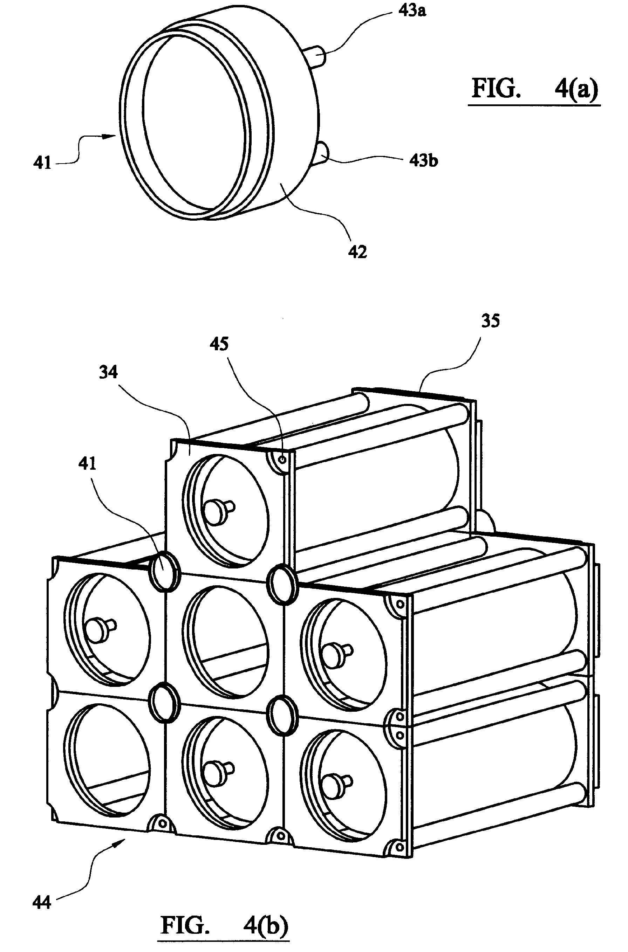

Figures 4a and b illustrate a locking member of the third embodiment of the storage assembly of the invention in isolation and in use respectively;

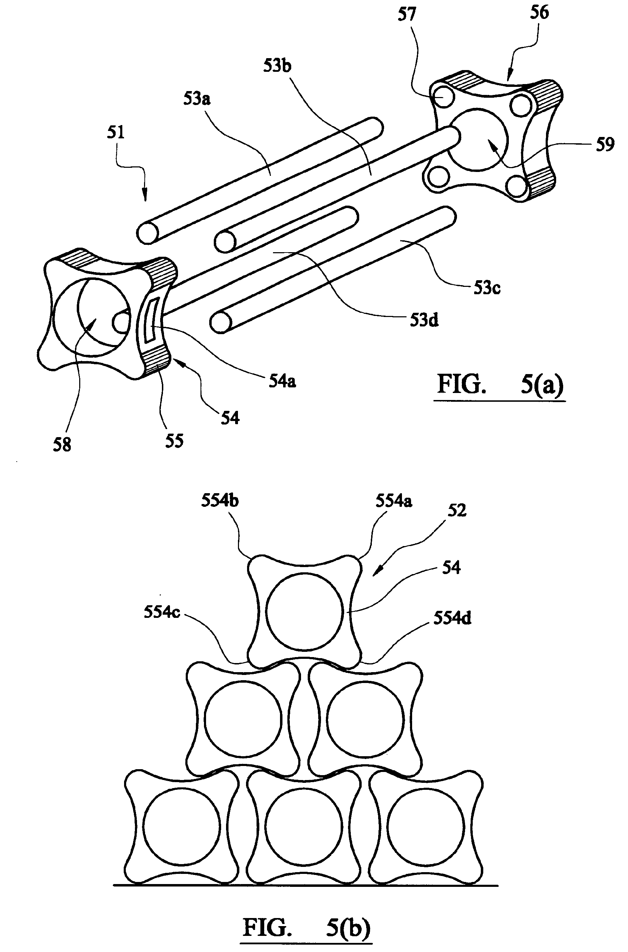

Figure 5b illustrates a fourth embodiment of the storage assembly of the invention in end view;
Figure 5a illustrates a unitary elongate housing of the storage assembly illustrated in Figure 5b in perspective disassembled view; and

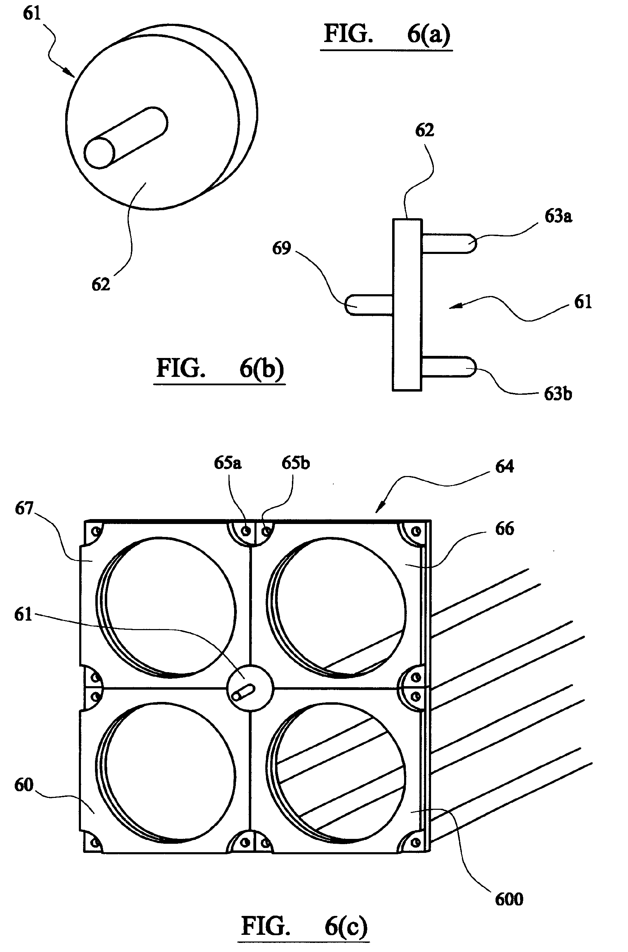

Figures 6a, b and c illustrate a locking member in perspective, side and installed perspective view.

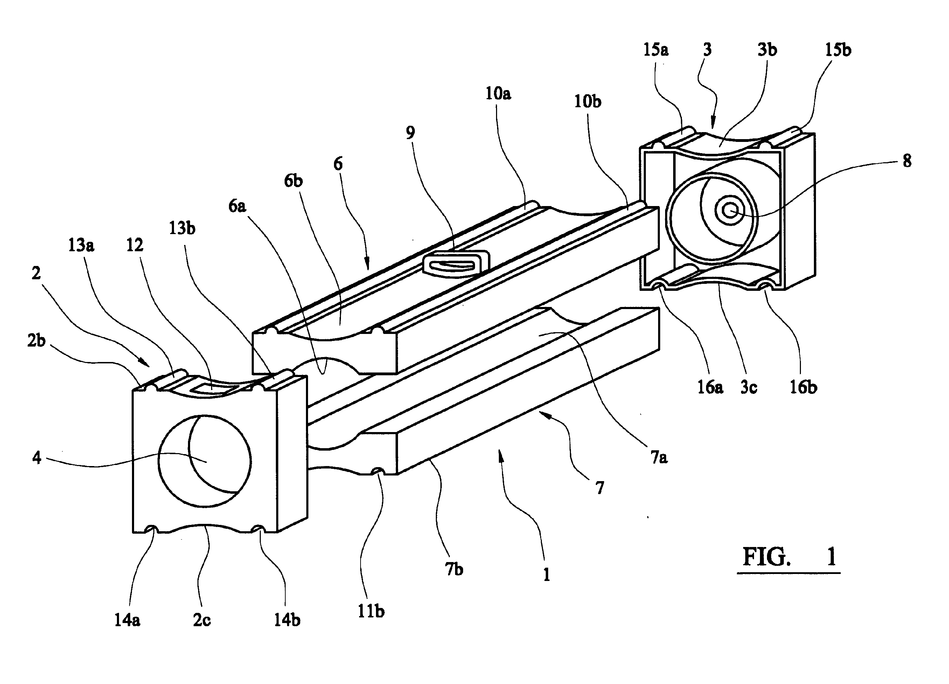

A unitary elongate housing of the storage assembly according to a first embodiment of the invention is illustrated in disassembled view in Figure 1. The unitary elongate housing is a four piece plastic construction designated generally by reference numeral 1. The body of a typical pressurised gas cylinder (not shown) is supported by a first trough member 6 and a second trough member 7. Each trough member 6 and 7 is arranged such that their curved interior surfaces 6a and 7a respectively encapsulate the body of the typical pressurised gas cylinder.

The unitary elongate housing 1 comprises a collar member 2 and a base member 3 having a largely identical box-like structure. The collar member 2 is provided with an aperture 4 adapted to support the neck of the typical pressurised gas cylinder. The base member 3 is internally adapted with a cup-shaped portion 8 capable of supporting a portion of the base of the typical pressurised gas cylinder. The first trough member 6 is provided on an exterior surface 6b with a handle 9 to assist portability. The collar member 2 is provided with a cut-out handle 12 for unstacking.

In order to construct the storage assembly of the first embodiment, a plurality of the unitary elongate housings 1 are laterally stacked. To assist stacking, the exterior surface 6b of the first trough member 6 and the exterior surface 7b of the second trough member 7 are interlockable. In this regard, a first elongate rib 10b in the exterior surface 6b is capable of engaging an elongate recess 11b in the exterior surface 7b of the second trough member 7 of an adjacent unitary elongate housing. Similarly, a second elongate rib 10a in the exterior surface 6b is capable of engaging a second elongate recess (hidden in this view) in the exterior surface 7b of the second trough member 7 of the adjacent unitary elongate housing.

To further assist stacking, an exterior surface 2b of the collar member 2 of the unitary elongate housing 1 is interlockable with an exterior surface 2c of the collar member 2 of an adjacent unitary elongate housing. In this regard, a first rib 13a in the exterior surface 2b is capable of engaging a first recess 14a in the exterior surface 2c of the collar member 2 of the adjacent unitary elongate housing and a second rib 13b in the exterior surface 2b is capable of engaging a second recess 14b in the exterior surface 2c of the collar member 2 of the adjacent unitary elongate housing.

Similarly, an exterior surface 3b of the base member 3 of the unitary elongate housing 1 is interlockable with an exterior surface 3c of the base member 3 of an adjacent unitary elongate housing. In this regard, a first rib 15a in the exterior surface 3b is capable of engaging a first recess 16a in the exterior surface 3c of the base member 3 of the adjacent unitary elongate housing. Similarly, a second rib 15b in the exterior surface 3b is capable of engaging a second recess 16b in the exterior surface 3c of the base member 3 of the adjacent unitary elongate housing.

It will be appreciated that (if desired), a plurality of unitary elongate housings may be laterally stacked in a staggered fashion so that an exterior surface 2b of the collar member 2 of a first unitary elongate housing is interlockable with the exterior surface 3c of the base member 3 of the adjacent unitary elongate housing.

With reference to Figures 2a, b and d, there is illustrated a unitary elongate housing 21 of the storage assembly according to a second embodiment of the invention into which is slidably positioned a pressurised gas cylinder 22. The body of the pressurised gas cylinder 22 is supported by four aluminium connecting tubes 23a-d.

The unitary elongate housing 21 comprises a collar member 24 and a base member 25 of largely identical construction. The construction is essentially a box-like structure in which the central portion of each edge is concave and is separated by box-like corners. The collar member 24 is provided with an aperture 26 adapted to support the neck 29 of the pressurised gas cylinder 22. The base member 25 is provided with an aperture 27 for supporting a portion 28 of the base of the pressurised gas cylinder 22. The collar member 24 is provided with a cut-out handle 224a and the base member 25 is provided with a handle 225a to assist portability and unstacking.

In order to construct the modular storage assembly 200 of Figure 2c, a plurality of the unitary elongate housings 21 are laterally stacked. Portions 24a and b of the box-like corners of the collar member 24 are substantially flat so as to be seated on the corresponding portions 24d and c of the box-like corners of a collar member of an adjacent unitary elongate housing. To assist stacking, the portions 24a and b are interlockable with the corresponding portions 24d and c of the adjacent unitary elongate housing. In this regard, the portions 24c and 24d comprise a leg 24f and 24e (respectively) capable of engaging a hole 24g and 24h (respectively) in the portions 24b and 24a. The opposing edges of the base member 25 are arranged in an identical manner.

In Figure 3a is illustrated a unitary elongate housing of a third embodiment of the storage assembly of the invention designated by numeral 31. The body of a pressurised gas cylinder (not shown) is supported by four aluminium connecting tubes 33a-d.

The elongate unitary housing 31 comprises a collar member 34 and a base member 35. The collar member 34 is provided with an aperture 36 adapted to support the neck of the pressurised gas cylinder. The solid base member 35 supports the base of the pressurised gas cylinder. In an alternative embodiment, the base member is provided with an aperture 37.

In order to construct the modular storage assembly, a plurality of the unitary elongate housings 31 are laterally stacked. To assist stacking, the collar member 34 comprises a first flat member 34a connected face to face to a second flat member 34b of largely identical construction and the first flat member 34a and second flat member 34b are axially offset. The first flat member 34a and second flat member 34b of the collar member 34 are capable of engaging a first flat member and a second flat member of the collar member of an adjacent unitary elongate housing. The base member 35 is of an identical offset construction (without an aperture) to further assist stacking.

Figure 4a illustrates a locking plug 41 of the third embodiment of the storage assembly of the invention 44 (which is described above with reference to Figure 3 and below with reference to Figure 4b). The locking plug 41 comprises a cylindrical body 42 to the inner face of which is attached four cylindrical pegs, two of which are indicated by reference numerals 43a and 43b. When a plurality of unitary elongate housings 44 are stacked as in Figure 4b, a plurality of locking plugs 41 are used to interlock the storage assembly 44. The four cylindrical pegs 43a,b engage four cylindrical slots (one of which is indicated with reference numeral 45) disposed in a corner of four adjacent collar members. A locking plug 41 may be similarly disposed to interlock adjacent base members 35.

With reference to Figures 5a, there is illustrated a disassembled unitary elongate housing 51 of a storage assembly 52 illustrated in Figure 5b into which may be slidably positioned a typical pressurised gas cylinder. The body of a typical pressurised gas cylinder (not shown) is supported by four plastic connecting tubes 53a-d.

The elongate unitary housing 51 comprises a plastic collar member 54 having rigid plastic or rubber corners 55 to provide grip and stability and a plastic base member 56 of largely identical construction. The construction is essentially a box-like structure in which the central portion of each edge is concave. Slots 57 are provided on the inner face of the collar member 54 and of the base member 56 for connecting the tubes 53a-d. The collar member 54 is provided with an aperture 58 adapted to support the neck of the typical pressurised gas cylinder. The base member 56 is provided with an aperture 59 for supporting a portion of the base of the typical pressurised gas cylinder. The collar member 54 is provided with a cut-out handle 54a to assist portability and unstacking.

In order to construct the modular storage assembly 52 of Figure 5b, a plurality of unitary elongate housings 51 are laterally stacked in a staggered fashion. Corners 554a, b, c and d of the collar member 54 are rounded so as to be seated in the concave portions of each edge of an adjacent unitary elongate housing. The exterior surface of the base member 55 is arranged in an identical manner. By laterally stacking the plurality of unitary elongate housings in a staggered fashion, the storage assembly of this embodiment adopts a pyramidal shaped stack which is very stable.

Figures 6a and 6b illustrate a locking plug 61 comprising a cylindrical body 62 to a rear end of which is attached four cylindrical pegs, two of which are indicated by reference numerals 63a and 63b. When a plurality of unitary elongate housings are stacked as in Figure 6c, a plurality of locking plugs 61 are used to interlock the storage assembly 64. The cylindrical pegs 63a and 63b engage four cylindrical slots (two of which are indicated by reference numerals 65a and 65b) disposed in a corner of four adjacent collar members 66, 67, 60 and 600. Attached to the front end of the cylindrical body is a handling peg 69 which may be pulled for the purposes of withdrawing the locking plug 61.

## Claims

1. A modular storage assembly for storing one or more gas cylinders or canisters comprising:
a plurality of laterally stacked, unitary elongate housings, each unitary elongate housing capable of housing a gas cylinder or cannister.

2. A modular storage assembly as claimed in claim 1 wherein the plurality of unitary elongate housings are laterally stacked in registry.

3. A modular storage assembly as claimed in any either of claims 1 or 2 wherein the plurality of unitary elongate housings are laterally stacked in a staggered fashion.

4. A modular storage assembly as claimed in any preceding claim wherein the plurality of unitary elongate housings are laterally and interlockably stacked.

5. A modular storage assembly as claimed in any preceding claim wherein each unitary elongate housing comprises:
a first end member spaced coaxially apart from a second end member, said first and second end member being interconnected by two or more spaced apart, elongate support members for supporting the body of the gas cylinder.

6. A modular storage assembly as claimed in claim 5 wherein the first and/or second end member is planar.

7. A modular storage assembly as claimed in claim 5 or 6 wherein the first planar end member and second planar end member are parallel spaced apart.

8. A modular storage assembly as claimed in any of claims 5 to 7 wherein at least one of the first end member and second end member is releasable so as to permit removal for the purposes of installing a gas cylinder.

9. A modular storage assembly as claimed in any of claims 5 to 8 wherein the first end member is a collar member adapted to support the neck of the gas cylinder.

10. A modular storage assembly as claimed in claim 9 wherein the first end member incorporates an aperture, hollow, depression or cup to support the neck of the gas cylinder.

11. A modular storage assembly as claimed in claim 9 or 10 wherein the first end member incorporates an aperture to support the neck of the gas cylinder.

12. A modular storage assembly as claimed in any of claims 5 to 11 wherein the second end member is a base member adapted to support a portion of the base of the gas cylinder.

13. A modular storage assembly as claimed in claim 12 wherein the second end member incorporates an aperture, hollow, depression or cup to support a portion of the base of the gas cylinder.

14. A modular storage assembly as claimed in any of claims 5 to 13 wherein the first and/or second member adopts a substantially box-like structure.

15. A modular storage assembly as claimed in claim 14 wherein a central portion of each edge of the substantially box-like structure is inwardly curved.

16. A modular storage assembly as claimed in claim 15 wherein the inwardly curved central portion of each edge of the substantially box-like structure are separated by regular box-like corners.

17. A modular storage assembly as claimed in any of claims 14 to 16 wherein an edge of the substantially box-like structure of a first unitary elongate housing is adapted to interlock an edge of the substantially box-like structure of an adjacent unitary elongate housing.

18. A modular storage assembly as claimed in claim 17 wherein opposing edges of the first unitary elongate housing are each adapted to interlock an edge of the substantially box-like structure of an adjacent unitary elongate housing.

19. A modular storage assembly as claimed in either of claims 17 or 18 wherein an edge of the box-like structure comprises a rib capable of engaging a recess in an edge of the substantially box-like structure of the adjacent unitary elongate housing.

20. A modular storage assembly as claimed in any of claims 17 to 19 wherein the edge of the box-like structure comprises a first rib and a second rib capable of engaging a first recess and a second recess in the edge of the substantially box-like structure of the adjacent unitary elongate housing.

21. A modular storage assembly as claimed in claim 20 wherein the ribs and recesses are located in portions of the box-like corners.

22. A modular storage assembly as claimed in any of claims 15 to 21 wherein the inwardly curved central portions of each edge are separated by rounded corners.

23. A modular storage assembly as claimed in any of claims 5 to 22 wherein the first and/or second end member comprises a first flat member connected face to face to a second flat member of largely identical construction and the first flat member and second flat member are axially offset so that the first flat member and second flat member of the first and/or second end member are capable of engaging a first flat member and a second flat member of a first and/or second end member of an adjacent unitary elongate housing.

24. A modular storage assembly as claimed in any of claims 5 to 23 wherein each elongate support member is a supporting rod, the volume bounded by which serves to encapsulate the gas cylinder.

25. A modular storage assembly as claimed in any of claims 5 to 23 wherein each elongate support member is a trough member, the interior curved surfaces of which serve to encapsulate the gas cylinder.

26. A modular storage assembly as claimed in claim 25 wherein the exterior surface of a first trough member is adapted to interlock the exterior surface of a second trough member of an adjacent unitary elongate housing.

27. A modular storage assembly as claimed in claim 26 wherein the exterior surface of the first trough member comprises an elongate rib capable of engaging an elongate recess in the exterior surface of the second trough member of the adjacent unitary elongate housing.

28. A modular storage assembly as claimed in claim 26 or 27 wherein the exterior surface of the first trough member comprises a first elongate rib and second elongate rib capable of engaging a first elongate recess and second elongate recess in the exterior surface of the second trough member of the adjacent unitary elongate housing.

29. A modular storage assembly as claimed in any preceding claim wherein a pair of adjacent unitary elongate housings are interlockably stacked by a locking member.

30. A modular storage assembly as claimed in claim 29 wherein the locking member comprises a body to a rear end of which is attached at least two pegs, wherein each peg engages a slot disposed in a corner of each of the pair of unitary elongate housings.

31. A modular storage assembly as claimed in claim 29 or 30 wherein two pairs of adjacent unitary elongate housings are interlocked by the locking member, wherein the locking member comprises a body to the rear end of which is attached at least four pegs, wherein each peg engages a slot disposed in a corner of each of the two pairs of unitary elongate housings.

32. A unitary elongate housing as defined in any preceding claim.
